# EUROPÄISCHE PATENTSCHRIFT

(11) **EP 1 551 679 B1**
(45) Veröffentlichungstag und Bekanntmachung des Hinweises auf die Patenterteilung: **19.07.2006**
(21) Anmeldenummer: 03757924.0
(22) Anmeldetag: 08.10.2003
(51) Int. Cl.: B60S 13/00

(54) **AUFNAHMEEINRICHTUNG FÜR EIN FAHRZEUG**
LIFTING DEVICE FOR A MOTOR VEHICLE
DISPOSITIF DE LEVAGE POUR UN VEHICULE

(30) Priorität: 17.10.2002 DE 10248397
(43) Veröffentlichungstag der Anmeldung: 13.07.2005
(73) Patentinhaber: Wap Wöhr Automatikparksysteme GmbH & Co Kg, 70825 Korntal-Münchingen (DE)
(72) Erfinder: ZANGERLE, Andreas, 71106 Magstadt (DE); EHLEITER, Karoline, 71034 Böblingen (DE); MAUCH, Michael, 71299 Wimsheim (DE); NIEPELT, Jens, 71032 Böblingen (DE); LEUTENMAYR, Robert, 71032 Böblingen (DE)
(74) Vertreter: Boehme, Ulrich
(86) Internationale Anmeldenummer: PCT/EP2003/011102
(87) Internationale Veröffentlichungsnummer: WO 2004/035360

(56) Entgegenhaltungen:
- DE-A- 19 741 638
- DE-U- 20 215 965
- GB-A- 343 772
- GB-A- 818 150

## Beschreibung

Die Erfindung betrifft eine Aufnahmeeinrichtung für ein mit Rädern auf einer Tragfläche stehendes Fahrzeug mit zwei parallel zueinander verlaufenden Tragelementen zur Anlage an einem Rad zu beiden Seiten der Auflagefläche des Rades auf der Tragfläche zwischen Tragfläche und Rad, mit einer Tragvorrichtung für die Tragelemente, die gegenüber der Tragfläche verschiebbar ist.

Wenn Fahrzeuge auf einer Tragfläche stehen, ist es außerordentlich schwierig, diese anzuheben, beispielsweise um sie auf ein fahrbares Untergestell aufzusetzen. Dazu ist meistens ein Kran oder ein ähnliches Werkzeug notwendig, und diese Geräte sind aufwendig, benötigen viel Platz und stehen nicht immer zur Verfügung.

In der GB 343772 A ist eine von Hand betätigbare Vorrichtung beschrieben, bei der zwei im wesentlichen parallel zueinander verlaufende Tragelemente zu beiden Seiten eines Rades in den Zwickel zwischen Tragfläche und Rad eingelegt und so einander angenähert werden können, daß das von beiden Seiten umfaßte Rad von der Tragfläche angehoben wird. Diese Aufnahmeeinrichtung ist auf der Tragfläche verfahrbar. Das Annähern der Tragelemente erfolgt von Hand über komplizierte Getriebemittel. Mit einer solchen Vorrichtung kann ein Rad eines Fahrzeuges angehoben werden, es ist aber nicht möglich, das Fahrzeug insgesamt anzuheben.

Es ist Aufgabe der Erfindung, eine Aufnahmeeinrichtung zu schaffen, mit der ohne Verwendung eines bekannten Hub- oder Fördergerätes ein Fahrzeug in einfacher Weise von einer Tragfläche aufgenommen werden kann, insbesondere um das Fahrzeug dann mit Hilfe der Aufnahmeeinrichtung an einen anderen Ort zu bewegen.

Diese Aufgabe wird bei einer Aufnahmeeinrichtung der eingangs genannten Art erfindungsgemäß dadurch gelöst, daß die Tragelemente als Verschiebebbahnen ausgebildet sind, daß eine Rückhalteeinrichtung für das Rad sowie Antriebsmittel vorgesehen sind, die die Aufnahmeeinrichtung gegenüber der Tragfläche verschieben und die die Rückhalteeinrichtungen längs der Verschiebebahnen synchron zur Vorschubbewegung der Tragvorrichtung mit gleicher Vorschubgeschwindigkeit jedoch in entgegengesetzter Richtung verschieben.

Eine solche Aufnahmeeinrichtung kann seitlich an ein Fahrzeug herangefahren werden, und zwar so, daß die beiden Verschiebebahnen eines Paares sich zu beiden Seiten eines Rades an dessen Unterseite anlegen. Beim weiteren Vorschieben sorgt die Rückhalteeinrichtung durch ihre Verschiebung, die synchron und entgegengesetzt der Vorschubbewegung der Tragvorrichtung erfolgt, dafür, daß das Rad auf die Verschiebebahnen aufgeschoben wird, dabei bewegt sich das Fahrzeug gegenüber der Tragfläche nicht, da die Vorschubgeschwindigkeit der Tragvorrichtung und die Vorschubgeschwindigkeit der Rückhalteeinrichtung gleich groß aber entgegengesetzt sind. Auf diese Weise kann die Tragvorrichtung so weit in Richtung auf das Fahrzeug vorgeschoben werden, bis sich die Verschiebebahnen auch an die Unterseite eines gegenüberliegenden Rades anlegen, das Fahrzeug also in voller Breite unterfahren.

Insbesondere kann vorgesehen sein, daß die Verschiebebahnen an der Tragvorrichtung anhebbar gelagert sind, so daß nach dem Aufschieben des Fahrzeuges auf die Verschiebebahnen dieses angehoben werden kann, um es von der Tragfläche zu entfernen. Grundsätzlich wäre es aber auch möglich, die Verschiebebahnen geringfügig gegenüber der Horizontalen geneigt auszubilden, so daß beim Unterfahren des Fahrzeuges dieses längs der Verschiebebahnen auf einer schrägen Ebene von der Tragfläche aufgenommen wird.

Besonders vorteilhaft ist es, wenn die Verschiebebahnen an der Tragvorrichtung um eine quer zu ihrer Längsrichtung angeordnete Schwenkachse verschwenkbar gelagert sind. Die Anhebung der Verschiebebahnen erfolgt dabei allein durch eine Verschwenkung der Verschiebebahnen gegenüber der Tragvorrichtung. Insbesondere können die Verschiebebahnen an einem Ende bis zu der Tragfläche absenkbar sein, so daß das Fahrzeug auf einer schrägen Ebene auf die Tragvorrichtung gezogen wird. Dabei kann das der Tragvorrichtung zugewandte Rad bereits von der Tragfläche abgehoben werden, während das gegenüberliegende Rad beim Vorschieben der Tragvorrichtung noch auf der Tragfläche aufruht.

Besonders vorteilhaft ist eine Anordnung, bei der die Schwenkachse im mittleren Bereich der Verschiebebahnen angeordnet ist. Wenn das Fahrzeug auf den geneigten Verschiebebahnen bis in die Mitte der Verschiebebahnen aufgeschoben wird, dann befindet sich die Schwenkachse etwa unterhalb der Mittelebene des Fahrzeuges, und dann können die Verschiebebahnen mit geringem Kraftaufwand aus der geneigten Stellung in eine horizontale Stellung verschwenkt werden, in der das Fahrzeug vollständig von der Tragfläche abgehoben ist.

Bei einer bevorzugten Ausführungsform sind zwei im Abstand voneinander angeordnete Schwenklagerungen für die Verschiebebahnen vorgesehen, die wahlweise derart freigegeben oder festgelegt werden können, daß nur jeweils eine der Schwenklagerungen eine Schwenkachse ausbildet. Die Schwenklagerungen können jeweils in einem endnahen Abschnitt der Verschiebebahnen angeordnet sein, so daß die Verschiebebahnen je nach Festlegung oder Freilegung der Schwenklagerungen entweder nach links oder nach rechts abgeschwenkt werden können, die Aufnahmeeinrichtung kann daher in einfacher Weise umgestellt werden für die Aufnahme eines Fahrzeuges auf der linken oder auf der rechten Seite der Aufnahmeeinrichtung. Die Freigabe oder Festlegung der Schwenklagerung kann beispielsweise durch das Einschieben bzw. Herausziehen eines Lagerbolzens erfolgen.

Die Tragvorrichtung kann vorzugsweise auf der Tragfläche verfahrbar sein, also über Räder auf der Tragfläche gehalten, so daß die Tragvorrichtung nach der Aufnahme des Fahrzeuges auf der Tragfläche in eine andere Position gebracht werden kann, beispielsweise im Rahmen einer Parkanlage, in der Fahrzeuge auf derartigen Tragvorrichtungen aufbewahrt und an den Abstellplatz gefahren werden können.

Bei einer ersten bevorzugten Ausführungsform ist vorgesehen, daß die Verschiebebahnen gebildet werden durch das obere Trum eines Förderbandes, das längs der Verschiebebahn umlaufend gelagert ist.

Bei einer anderen Ausführungsform kann die Verschiebebahn gebildet werden durch eine Rollenbahn.

Sowohl das Förderband als auch die Rollenbahn können frei umlaufend ausgestaltet sein, der Vorschub des Fahrzeuges längs der Verschiebebahn erfolgt dann ausschließlich durch die Rückhalteeinrichtung, die das Rad längs der Verschiebebahnen bewegt.

Insbesondere kann die Rückhalteeinrichtung ein hinter ein Rad einschiebbarer, an der Rückseite des Rades anlegbarer Mitnehmer sein. Es ist auch günstig, wenn die Rückhalteeinrichtung zusätzlich einen an der Vorderseite eines Rades anlegbaren Mitnehmer umfaßt, dieser kann dann dafür sorgen, das Fahrzeug wieder von den Verschiebebahnen herunterzuschieben, wenn das Fahrzeug von der Tragvorrichtung auf die Tragfläche zurückgestellt werden soll. Dabei können beide Mitnehmer am selben Rad anliegen oder aber auch an verschiedenen Rädern, beispielsweise können beide Mitnehmer an den Innenseiten der beiden Räder einer Achse anliegen.

Bei einer besonders bevorzugten Ausführungsform wird die Rückhalteeinrichtung durch das Förderband selbst gebildet. Ein solches Förderband, das beispielsweise als Kettenband oder als umlaufendes Gummiband ausgebildet sein kann, legt sich an die Unterseite der Räder und nimmt diese durch Reibung mit, gegebenenfalls auch durch das Rad hintergreifende Mitnehmer, in diesem Falle ist das Förderband angetrieben, so daß das Förderband also eine Doppelfunktion erfüllt, nämlich einmal die Ausbildung der Verschiebebahn und zum anderen die Ausbildung der Rückhalteeinrichtung. Vorzugsweise ist die Länge der Verschiebebahnen geringfügig größer als die Breite der Fahrzeuge, so daß die Aufnahmeeinrichtung einerseits eine geringe Baugröße aufweist und andererseits zur Aufnahme von Fahrzeugen unterschiedlicher Typen geeignet ist.

Es wäre aber natürlich auch möglich, die Verschiebebahnen an die Breite des Fahrzeuges anzupassen oder sogar geringfügig kürzer auszugestalten, im letzteren Falle würden die aufgenommenen Fahrzeuge seitlich geringfügig über die Verschiebebahnen vorstehen.

Es ist vorteilhaft, wenn an der Aufnahmeeinrichtung im Abstand zueinander zwei oder auch mehrere Paare von Verschiebebahnen angeordnet sind, so daß dieselbe Aufnahmeeinrichtung gleichzeitig das Fahrzeug an den Vorderrädern und an den Hinterrädern aufnehmen kann.

Vorzugsweise ist dabei der gegenseitige Abstand der Paare voneinander verstellbar, so daß die Aufnahmeeinrichtung an Fahrzeuge mit unterschiedlichem Radstand angepaßt werden kann. Während üblicherweise zwei derartige Paare ausreichen, kann es günstig sein, noch zusätzliche Paare vorzusehen, so daß auch bei sehr unterschiedlichen Achsabständen Fahrzeuge aufgenommen werden können, ohne daß dazu große Verstellwege der Verschiebebahnpaare notwendig werden.

Es wäre auch möglich, zwei derartige Aufnahmeeinrichtungen zu verwenden, um gleichzeitig das Fahrzeug an verschiedenen Rädern anzuheben. Es ist dann gemäß einer bevorzugten Ausführungsform vorteilhaft, wenn die Aufnahmeeinrichtung über eine Steuerung mit einer zweiten Aufnahmeeinrichtung derart gekoppelt ist, daß die Vorschubbewegungen der Tragvorrichtungen und der Rückhalteeinrichtungen beider Aufnahmeeinrichtungen koordiniert ablaufen. Auf diese Weise können die nicht fest miteinander verbundenen Aufnahmeeinrichtungen z.B. an den Achsabstand des Fahrzeuges angepaßt oder von gegenüberliegenden Seiten her an dieses herangefahren werden, bei der Aufnahme arbeiten sie jedoch koordiniert zusammen und nehmen das Fahrzeug gleichzeitig gemeinsam an zwei Rädern auf.

Bei einer bevorzugten Ausführungsform ist weiterhin vorgesehen, daß der Abstand der beiden Verschiebebahnen zueinander verstellbar ist. Dadurch lassen sich die Verschiebebahnen an unterschiedliche Raddurchmesser der Fahrzeuge anpassen.

Zur besseren Anpassung der Verschiebebahnen an die Umfangsfläche des aufzunehmenden Rades kann vorgesehen sein, daß die Verschiebebahnen gegenüber der Tragfläche geneigt sind. Diese Neigung kann vorzugsweise verstellbar sein.

Die nachfolgende Beschreibung bevorzugter Ausführungsformen der Erfindung dient im Zusammenhang mit der Zeichnung der näheren Erläuterung. Es zeigen:
- Figur 1:: eine Aufnahmeeinrichtung beim Beginn der Aufnahme eines auf einer Tragfläche stehenden Fahrzeuges;
- Figur 2:: eine Ansicht ähnlich Figur 1 nach teilweisem Einschieben der Aufnahmeeinrichtung unter das Fahrzeug bei einem bereits auf der Aufnahmeeinrichtung aufgenommenen Rad und einem noch auf der Tragfläche stehenden Rad;
- Figur 3:: eine Ansicht ähnlich Figur 1 bei vollständig unter das Fahrzeug eingeschobener Aufnahmeeinrichtung;
- Figur 4:: eine schematische Ansicht eines auf zwei Verschiebebahnen aufgenommenen Rades;
- Figur 5:: eine vergrößerte Ansicht ähnlich Figur 2 mit einer Verschiebebahn in Form eines umlaufenden Förderbandes;
- Figur 6:: eine Ansicht ähnlich Figur 5 mit einer Verschiebebahn in Form einer Rollenbahn mit einem an einem Rad anlegbaren Mitnehmer;
- Figur 7:: eine schematische Seitenansicht einer Aufnahmeeinrichtung mit zwei wahlweise freigebbaren oder festlegbaren Schwenklagerungen mit einseitig abgesenkten Verschiebebahnen und
- Figur 8: eine Ansicht ähnlich Figur 7 mit nach der gegenüberliegenden Seite abgesenkten Verschiebebahnen.

Die in der Zeichnung dargestellte Aufnahmeeinrichtung 1 umfaßt einen flachen Rahmen 2 mit Rädern 3, der auf einer Tragfläche 4 verfahrbar ist, auf der auch ein Fahrzeug 5, im dargestellten Beispiel ein Kraftfahrzeug, mit Rädern 6 steht.

An dem Rahmen 2 sind zwei Verschiebebahnen 7, 8 parallel zueinander angeordnet, die sich quer zur Drehachse der Räder 6 erstrecken. Beide Verschiebebahnen 7, 8 sind im Prinzip gleich und spiegelverkehrt aufgebaut, nachstehend wird nur eine dieser Verschiebebahnen näher erläutert. Jede Verschiebebahn 7, 8 wird gebildet von einem umlaufenden Förderband 9, dieses Förderband 9 wird um zwei Umlenkrollen 10, 11 herumgeführt, und das obere Trum 12 des Förderbandes 9 wird durch in der Zeichnung nicht dargestellte Mittel zwischen den Umlenkrollen 10 unterstützt. Die Umlenkrollen 10, 11, die Stützmittel und das Förderband 9 sind insgesamt an einem Träger 13 angeordnet, der um eine parallel zur Drehachse der Räder 3 verlaufende Schwenkachse 14 verschwenkbar am Rahmen 2 gelagert ist, die Schwenkachse 14 befindet sich dabei in der Mitte zwischen den Rädern 3 und in der Mitte zwischen den Umlenkrollen 10 und 11. Durch die verschwenkbare Anordnung ist es möglich, das Förderband 9 einseitig bis auf die Tragfläche 4 abzusenken, so daß in diesem Bereich eine sehr geringe Bauhöhe erreicht wird, das obere Trum 12 befindet sich dann im Bereich der abgesenkten Umlenkrolle 11 in sehr geringem Abstand von der Tragfläche 4.

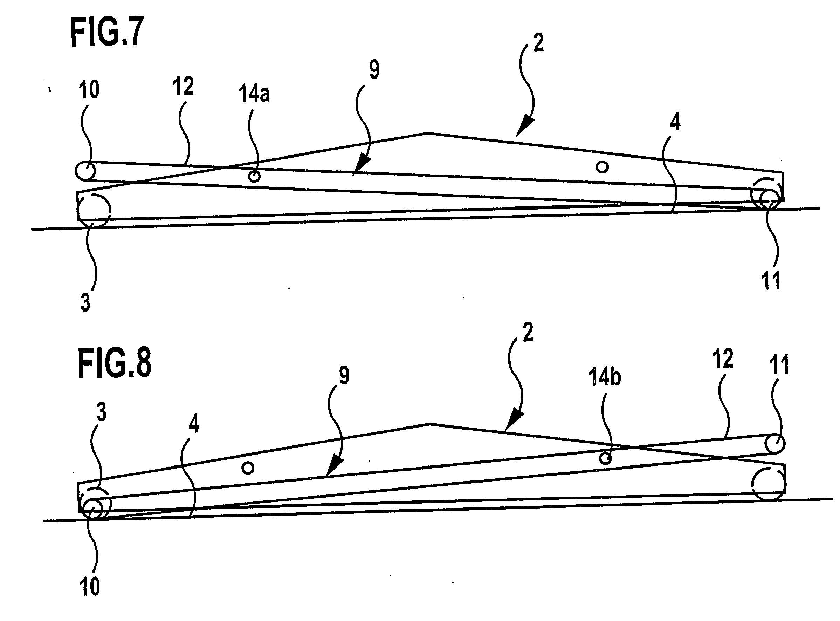

In den Figuren 7 und 8 ist eine abgewandelte Ausführungsform dargestellt, welche im Abstand zueinander zwei Schwenklagerungen ausbildet, die wahlweise festgelegt oder freigegeben werden können, beispielsweise durch Einschieben und Herausziehen einer Lagerwelle. Es ist dadurch möglich, die Verschiebebahnen 7, 8 wahlweise um eine erste Schwenkachse 14a oder eine zweite Schwenkachse 14b zu verschwenken. Diese Schwenklagerungen können sich in den Endabschnitten der Verschiebebahnen 7, 8 befinden, so daß zur Erreichung einer bestimmten Hubhöhe des freien Endes der Verschiebebahnen relativ geringe Schwenkwinkel notwendig werden. Durch Auswahl einer der beiden Schwenkachsen 14a oder 14b kann die Aufnahmeeinrichtung wahlweise für die Aufnahme auf der linken Seite oder auf der rechten Seite umgerüstet werden, wie dies aus den Darstellungen der Figuren 7 und 8 deutlich wird.

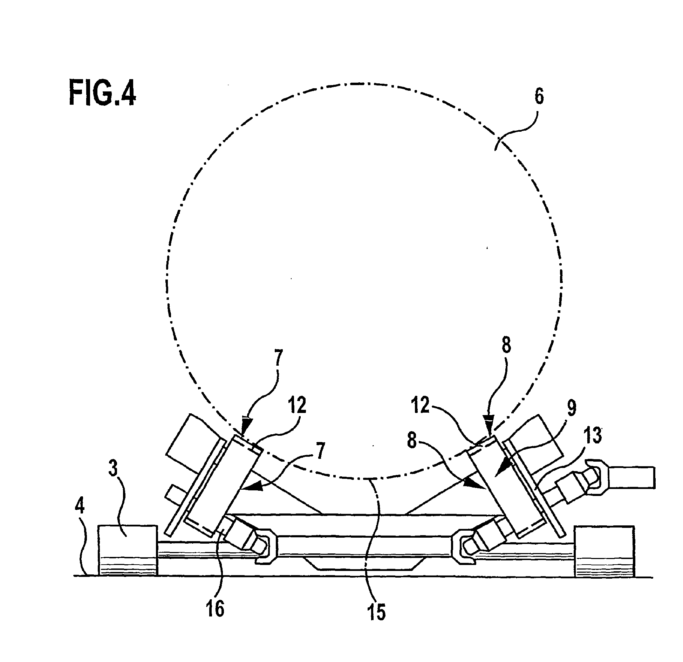

Der Träger 13 mit dem Förderband 9 ist außerdem so gegenüber der Senkrechten seitlich geneigt, daß das obere Trum 12 im wesentlichen flächig an die Außenseite des Rades 6 des Fahrzeuges 5 anlegbar ist, wenn die abgesenkten Enden des Förderbandes 9 zu beiden Seiten der Auflagefläche 15 des Rades 6 zwischen die Tragfläche 4 und das Rad 6 eingeschoben werden. Die Neigung hängt damit im wesentlichen vom gegenseitigen Abstand der beiden Verschiebebahnen 7, 8 ab und auch vom Abstand des oberen Trums 12 von der Tragfläche 4. Dies wird aus der Darstellung der Figur 4 deutlich.

Der Abstand der Verschiebebahnen 7, 8 ist in jedem Fall kleiner als der Durchmesser des Rades 6, jedoch so groß, daß im Zwickel zwischen der Tragfläche 4 und dem Rad 6 genügend Platz bleibt, das abgesenkte Ende des Förderbandes 9 in diesen Zwickel einzuschieben. Der Abstand der Verschiebebahnen 7, 8 voneinander kann einstellbar sein, so daß eine Anpassung an die Raddurchmesser erfolgen kann. Ebenfalls zur optimalen Anpassung an unterschiedliche Raddurchmesser kann auch die Neigung der Verschiebebahnen gegenüber der Senkrechten verstellbar sein.

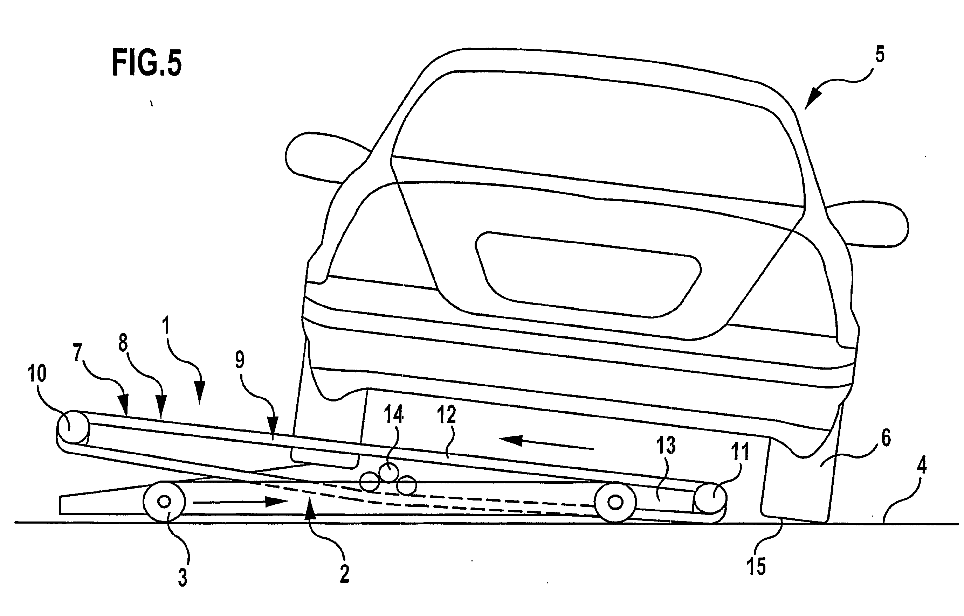

Das Förderband 9 ist bei dem Ausführungsbeispiel der Figuren 4 und 5 über Antriebswellen 16 angetrieben, die auch die Räder 3 des Rahmens 2 antreiben können, und zwar durch geeignete Getriebemittel, die in der Zeichnung nicht detailliert dargestellt sind, in der Weise, daß die Umlaufgeschwindigkeit des Förderbandes 9 gleich groß ist wie die Fahrgeschwindigkeit der Räder 3, die Richtung ist aber so gewählt, daß die Vorschubbewegung des Rahmens 2 der Bewegungsrichtung des oberen Trums 12 des Förderbandes 9 entgegengesetzt ist. Mit anderen Worten bleibt das obere Trum 12 bei einem Vorschub des Rahmens 2 auf der Tragfläche 4 gegenüber dieser Tragfläche 4 unverschoben, da sich das Trum 12 relativ zum Rahmen 2 in entgegengesetzter Richtung mit gleicher Geschwindigkeit bewegt.

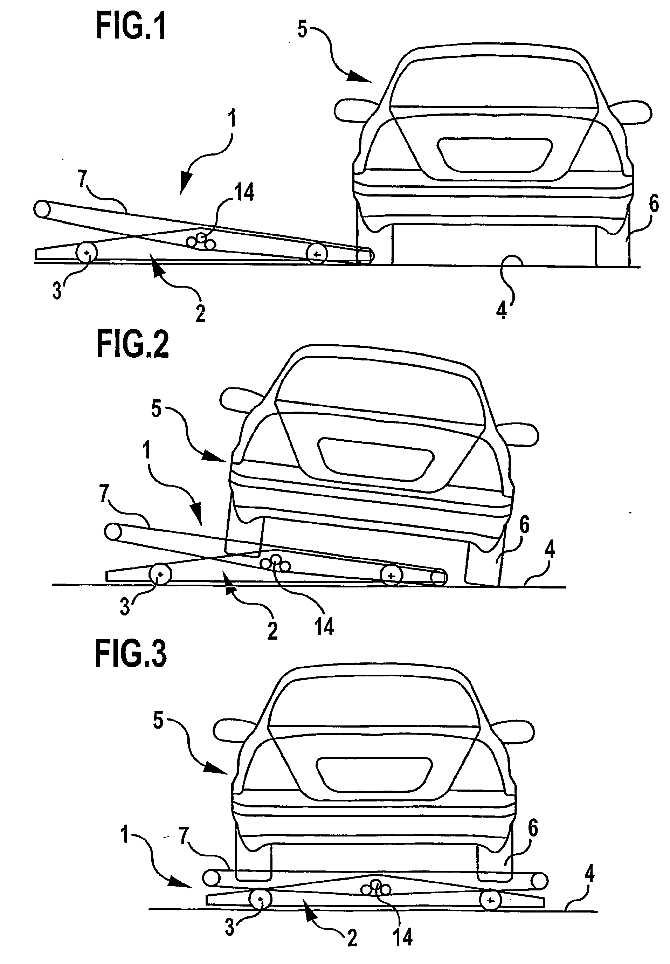

Zur Aufnahme eines Fahrzeuges 5 wird der Träger 13 mit dem Förderband 9 so verschwenkt, daß die Umlenkrolle 11 vollständig abgesenkt ist. In dieser Stellung des Förderbandes 9 wird die Aufnahmeeinrichtung 1 seitlich an ein Rad 6 des Fahrzeuges 5 herangefahren und zu beiden Seiten dieses Rades so weit unter das Rad geschoben, bis das obere Trum 12 des Förderbandes 9 an der Außenseite des Rades 6 anliegt. Beim weiteren Vorschieben des Rahmens 2 bleibt das obere Trum 12 des Förderbandes 9 in direktem Kontakt mit dem Rad 6, da das obere Trum 12 gegenüber der Tragfläche 4 in der beschriebenen Weise seitlich nicht verschoben wird, gilt dies auch für das Rad 6, es stellt sich hier also ein fester Haftreibungskontakt ein. Das Rad 6 wird durch die geringfügige Neigung des oberen Trums 12 in Längsrichtung von der Tragfläche 4 aufgenommen, das Fahrzeug wird dabei leicht geneigt, wie es aus der Darstellung der Figur 2 und auch der Figur 5 deutlich wird. Das Fahrzeug ruht dabei seitlich auf dem gegenüberliegenden Rad 6 auf der Tragfläche 4, wird also nicht seitlich verschoben, so daß dadurch die Aufnahmeeinrichtung 1 in der beschriebenen Weise unter das Fahrzeug 5 geschoben werden kann. Sobald das abgesenkte Ende der Förderbänder 9 das gegenüberliegende Rad 6 des Fahrzeuges 5 erreicht, wird auch dieses unterfahren und schließlich von den Förderbändern 9 mitgenommen und angehoben. Dies ist ohne weiteres möglich, da das Fahrzeug an einer seitlichen Verschiebung durch den Kontakt mit dem Trum 12 des Förderbandes 9 gehindert wird. Es ist auf diese Weise möglich, das Fahrzeug 5 vollständig auf die schräge Ebene aufzuschieben, die durch die Förderbänder 9 aufgespannt wird, vorzugsweise wird dabei das Fahrzeug so weit auf die Aufnahmeeinrichtung 1 aufgeschoben, bis die Mitte des Fahrzeuges 5 etwa über der Schwenkachse 14 angeordnet ist. In diese Stellung kann der Träger 13 mit den Förderbändern 9 mit geringem Kraftaufwand in die horizontale Stellung verschwenkt werden, die in Figur 3 dargestellt ist. Das Fahrzeug 5 ist damit auf der Aufnahmeeinrichtung 1 aufgenommen und kann auf dieser verschoben werden. Dies kann auf den Rädern 3 erfolgen, die Aufnahmeeinrichtung 1 kann damit mit dem aufgenommenen Fahrzeug beispielsweise in eine andere Parkposition gebracht werden.

Das Abladen des Fahrzeuges erfolgt in umgekehrter Reihenfolge, zunächst wird der Träger 13 mit dem Förderband 9 in die schräge Lage verschwenkt, dann wird der Rahmen 2 seitlich relativ zum Fahrzeug 5 verfahren, und durch die synchrone Kopplung mit den Förderbändern 9 führt dies dazu, daß diese das Fahrzeug von den Verschiebebahnen herunterschieben und auf der Tragfläche 4 abstellen.

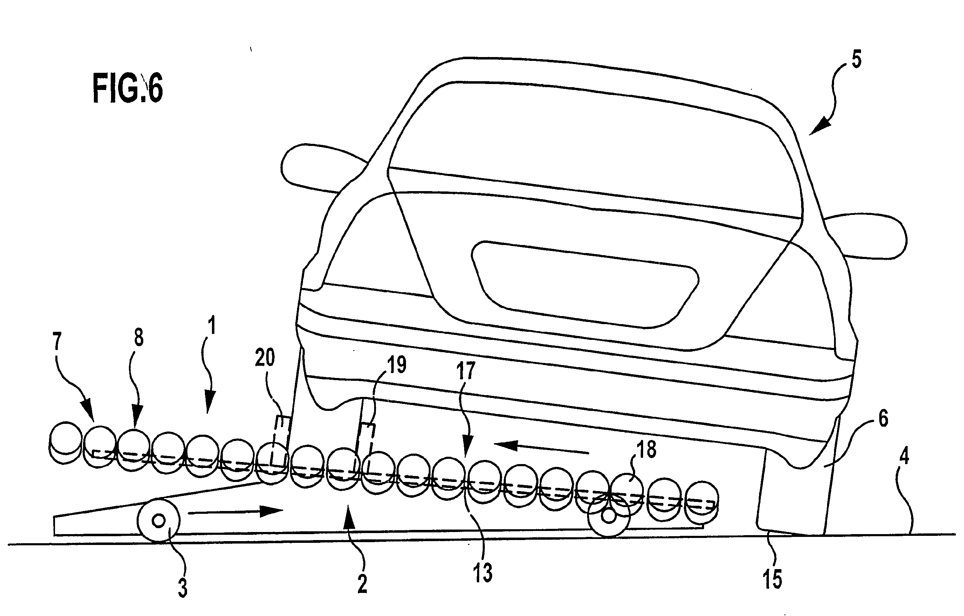

Bei dem Ausführungsbeispiel der Figur 6 ist ein ähnlicher Aufbau der Aufnahmeeinrichtung 1 vorgesehen, einander entsprechende Teile tragen daher dieselben Bezugszeichen.

Im Unterschied zu dem Ausführungsbeispiel der Figur 5 ist jedoch das Förderband 9 ersetzt worden durch eine Rollenbahn 17 mit einer Vielzahl von frei drehbaren oder angetriebenen Rollkörpern 18 längs der Verschiebebahnen 7, 8.

Bei nicht angetriebenen Rollkörpern 18 sind zusätzlich Mitnehmer 19 vorgesehen, die hinter das Rad 6 des Fahrzeuges 5 eingeschoben werden können, beispielsweise durch Einschwenken oder durch Anheben, sobald die Rollkörper 18 am abgesenkten Ende der Rollenbahn 17 das Rad 6 hintergreifen. Der Mitnehmer 19 ist durch einen in der Zeichnung nicht dargestellten Antrieb gegenüber der Rollenbahn 17 verschiebbar, und zwar synchron und mit derselben Geschwindigkeit, mit der der Rahmen 2 vorschiebbar ist, jedoch in entgegengesetzter Richtung. Damit bleibt der Mitnehmer 19 beim Vorschieben der Aufnahmeeinrichtung 1 in Richtung auf das Fahrzeug 5 in gleicher Weise wie das obere Trum 12 des Förderbandes 9 beim Ausführungsbeispiel der Figuren 1 bis 4 gegenüber der Tragfläche 4 stationär und zieht somit das Fahrzeug auf die Rollenbahn 17, bis das Fahrzeug 5 vollständig auf dieser aufgenommen ist. Während also bei dem Ausführungsbeispiel der Figuren 4 bis 5 das Förderband 9 sowohl die Verschiebebahnen 7, 8 ausbildet als auch eine Mitnehmerfunktion hat, durch welche das Fahrzeug auf die Verschiebebahnen aufgezogen wird, sind diese Funktionen beim Ausführungsbeispiel der Figur 6 getrennt, die Rollenbahn bildet lediglich die Verschiebebahnen 7, 8, das Fahrzeug wird jedoch durch den Mitnehmer 19 auf die Verschiebebahnen 7, 8 aufgeschoben. Zum Herunterschieben ist es günstig, wenn ein zweiter Mitnehmer 20 an der Vorderseite des Rades 6 zu Anlage kommt, der parallel mit dem Mitnehmer 19 verschoben wird.

Grundsätzlich wäre es auch möglich, die Verschiebebahnen 7, 8 durch umlaufende Förderbänder zu bilden, wie sie beim Ausführungsbeispiel der Figuren 4 und 5 verwendet werden, die jedoch frei umlaufen. Dann wäre es auch hier sinnvoll, diese Förderbänder zu kombinieren mit Mitnehmern 19, 20, die das Rad 6 des Fahrzeuges 5 erfassen und längs der Verschiebebahnen mitnehmen, wenn der Rahmen 2 verfahren wird. Wesentlich ist in jedem Fall, daß zwischen der Umlaufbewegung eines angetriebenen Förderbandes 9 (Ausführungsbeispiel der Figuren 4 und 5) oder der Bewegung der Mitnehmer 19, 20 (Ausführungsbeispiel der Figur 6) eine feste Korrelation derart besteht, daß diese Bewegungen synchron, gleich groß und entgegengesetzt sind.

Die in der Zeichnung dargestellten Aufnahmeeinrichtungen 1 umfassen lediglich zwei Verschiebebahnen 7, 8, die ein Paar ausbilden, es wäre selbstverständlich möglich, zwei oder mehr derartige Paare nebeneinander an einer einzigen Aufnahmeeinrichtung 1 anzuordnen, so daß gleichzeitig Vorderräder und Hinterräder oder auch gegenüberliegende Räder des Fahrzeuges aufgenommen werden können. Der Abstand dieser Paare voneinander kann verstellbar sein.

## Patentansprüche

1. Aufnahmeeinrichtung (1) für ein mit Rädern (6) auf einer Tragfläche (4) stehendes Fahrzeug (5), mit zwei parallel zueinander verlaufenden Tragelementen zur Anlage an einem Rad (6) zu beiden Seiten der Auflagefläche (15) des Rades (6) auf der Tragfläche (4) zwischen Tragfläche (4) und Rad (6), mit einer Tragvorrichtung (2) für die Tragelemente, die gegenüber der Tragfläche (4) und quer zu den Rädern (6) verschiebbar ist, und die Tragelemente als Verschiebebbahnen (7,8) ausgebildet sind, **dadurch gekennzeichnet, dass** daß eine Rückhalteeinrichtung (19, 20) für das Rad (6) sowie Antriebsmittel vorgesehen sind, die die Aufnahmeeinrichtung (1) gegenüber der Tragfläche (4) verschieben und die die Rückhalteeinrichtung (19, 20) längs der Verschiebebahnen (7, 8) synchron zur Vorschubbewegung der Tragvorrichtung (2) mit gleicher Vorschubgeschwindigkeit jedoch in entgegengesetzter Richtung verschieben.

2. Aufnahmeeinrichtung nach Anspruch 1, **dadurch gekennzeichnet, daß** die Verschiebebahnen (7, 8) an der Tragvorrichtung (2) anhebbar gelagert sind.

3. Aufnahmeeinrichtung nach Anspruch 2, **dadurch gekennzeichnet, daß** die Verschiebebahnen (7, 8) an der Tragvorrichtung (2) um eine quer zu ihrer Längsachse angeordnete Schwenkachse (14) verschwenkbar gelagert sind.

4. Aufnahmeeinrichtung nach Anspruch 3, **dadurch gekennzeichnet, daß** die Verschiebebahnen (7, 8) an einem Ende bis zu der Tragfläche (4) absenkbar sind.

5. Aufnahmeeinrichtung nach einem der Ansprüche 3 oder 4, **dadurch gekennzeichnet, daß** die Schwenkachse (14) im mittleren Bereich der Verschiebebahnen (7, 8) angeordnet ist.

6. Aufnahmeeinrichtung nach einem der Ansprüche 3 oder 4, **dadurch gekennzeichnet, daß** zwei im Abstand voneinander angeordnete Schwenklagerungen für die Verschiebebahnen (7, 8) vorgesehen sind, die wahlweise derart freigegeben oder festgelegt werden können, daß nur jeweils eine der Schwenklagerungen eine Schwenkachse (14a, 14b) ausbildet.

7. Aufnahmeeinrichtung nach einem der voranstehenden Ansprüche, **dadurch gekennzeichnet, daß** die Tragvorrichtung (2) auf der Tragfläche (4) verfahrbar ist.

8. Aufnahmeeinrichtung nach einem der voranstehenden Ansprüche, **dadurch gekennzeichnet, daß** die Verschiebebahnen (7, 8) gebildet werden durch das obere Trum (12) eines Förderbandes (9), das längs der Verschiebebahn (7, 8) umlaufend gelagert ist.

9. Aufnahmeeinrichtung nach einem der Ansprüche 1 bis 7, **dadurch gekennzeichnet, daß** die Verschiebebahn (7, 8) gebildet wird durch eine Rollenbahn (17).

10. Aufnahmeeinrichtung nach einem der voranstehenden Ansprüche, **dadurch gekennzeichnet, daß** die Rückhalteeinrichtung ein hinter ein Rad (6) einschiebbarer, an der Rückseite des Rades (6) anlegbarer Mitnehmer (19) ist.

11. Aufnahmeeinrichtung nach Anspruch 10, **dadurch gekennzeichnet, daß** die Rückhalteeinrichtung zusätzlich einen an der Vorderseite eines Rades (6) anlegbaren Mitnehmer (20) umfaßt.

12. Aufnahmeeinrichtung nach Anspruch 8, **dadurch gekennzeichnet, daß** die Rückhalteeinrichtung durch das Förderband (9) selbst gebildet wird.

13. Aufnahmeeinrichtung nach einem der voranstehenden Ansprüche, **dadurch gekennzeichnet, daß** die Länge der Verschiebebahnen (7, 8) geringfügig größer ist als die Breite des Fahrzeuges (5).

14. Aufnahmeeinrichtung nach einem der voranstehenden Ansprüche, **dadurch gekennzeichnet, daß** an ihr im Abstand zueinander zwei oder mehr Paare von Verschiebebahnen (7, 8) angeordnet sind.

15. Aufnahmeeinrichtung nach Anspruch 14, **dadurch gekennzeichnet, daß** der gegenseitige Abstand der Paare voneinander verstellbar ist.

16. Aufnahmeeinrichtung nach einem der Ansprüche 1 bis 13, **dadurch gekennzeichnet, daß** sie über eine Steuerung mit einer zweiten Aufnahmeeinrichtung (1) derart gekoppelt ist, daß die Vorschubbewegungen der Tragvorrichtungen (2) und der Rückhalteeinrichtungen (12; 19, 20) beider Aufnahmeeinrichtungen (1) koordiniert ablaufen.

17. Aufnahmeeinrichtung nach einem der voranstehenden Ansprüche, **dadurch gekennzeichnet, daß** der Abstand der beiden Verschiebebahnen (7, 8) zueinander verstellbar ist.

18. Aufnahmeeinrichtung nach einem der voranstehenden Ansprüche, **dadurch gekennzeichnet, daß** die Verschiebebahnen (7, 8) gegenüber der Tragfläche (4) geneigt sind.

19. Aufnahmeeinrichtung nach Anspruch 18, **dadurch gekennzeichnet, daß** die Neigung der Verschiebebahnen (7, 8) gegenüber der Tragfläche (4) verstellbar ist.

## Claims

1. A lifting device (1) for a vehicle (5) standing with wheels (6) on a supporting surface (4), comprising two supporting elements, extending parallel to one another, for placing against a wheel (6) on both sides of the contact surface (15) of the wheel (6) on the supporting surface (4) between the supporting surface (4) and the wheel (6), a supporting device (2) for the supporting elements which is displaceable relative to the supporting surface (4) and transversely to the wheels (6), and the supporting elements are moving tracks (7, 8), **characterised in that** a retaining device (19, 20) for the wheel (6) and also drive means are provided which displace the lifting device (1) relative to the supporting surface (4) and which displace the retaining device (19, 20) along the moving tracks (7, 8) synchronously with the advancing movement of the supporting device (2) at the same advancing speed but in the opposite direction.

2. A lifting device according to Claim 1, **characterised in that** the moving tracks (7, 8) are mounted on the supporting device (2) so as to be capable of being raised.

3. A lifting device according to Claim 2, **characterised in that** the moving tracks (7, 8) are mounted on the supporting device (2) so as to be pivotable about a pivot axis (14) disposed transversely to the longitudinal axis thereof.

4. A lifting device according to Claim 3, **characterised in that** the moving tracks (7, 8) may be lowered at one end to the supporting surface (4).

5. A lifting device according to one of Claims 3 or 4, **characterised in that** the pivot axis (14) is disposed in the central region of the moving tracks (7, 8).

6. A lifting device according to one of Claims 3 or 4, **characterised in that** two pivot mountings for the moving tracks (7, 8) are provided, disposed so as to be spaced from one another, which may be selectively released or fixed in such a way that only one of the pivot mountings respectively forms a pivot axis (14a, 14b).

7. A lifting device according to one of the preceding claims, **characterised in that** the supporting device (2) is movable on the supporting surface (4).

8. A lifting device according to one of the preceding claims, **characterised in that** the moving tracks (7, 8) are formed by the upper run (12) of a conveyor belt (9) which is mounted so as to circulate along the moving track (7, 8).

9. A lifting device according to one of Claims 1 to 7, **characterised in that** the moving track (7, 8) is formed by a roller conveyor (17).

10. A lifting device according to one of the preceding claims, **characterised in that** the retaining device is a driver (19) which may be inserted behind a wheel (6) and placed against the rear side of the wheel (6).

11. A lifting device according to Claim 10, **characterised in that** the retaining device additionally comprises a driver (20) which may be placed against the front side of a wheel (6).

12. A lifting device according to Claim 8, **characterised in that** the retaining device is formed by the conveyor belt (9) itself.

13. A lifting device according to one of the preceding claims, **characterised in that** the length of the moving tracks (7, 8) is slightly greater than the width of the vehicle (5).

14. A lifting device according to one of the preceding claims, **characterised in that** two or more pairs of moving tracks (7, 8) are disposed on the said lifting device so as to be spaced from one another.

15. A lifting device according to Claim 14, **characterised in that** the mutual spacing of the pairs from one another is adjustable.

16. A lifting device according to one of Claims 1 to 13, **characterised in that** it is coupled via a control means with a second lifting device (1) in such a way that the advancing movements of the supporting devices (2) and of the retaining devices (12; 19, 20) of both lifting devices (1) take place in a coordinated manner.

17. A lifting device according to one of the preceding claims, **characterised in that** the spacing of the two moving tracks (7, 8) from one another is adjustable.

18. A lifting device according to one of the preceding claims, **characterised in that** the moving tracks (7, 8) are inclined relative to the supporting surface (4).

19. A lifting device according to Claim 18, **characterised in that** the inclination of the moving tracks (7, 8) relative to the supporting surface (4) is adjustable.

## Revendications

1. Système de levage (1) pour un véhicule (5) placé avec des roues (6) sur une surface portante (4), comportant deux éléments porteurs s'étendant parallèlement l'un à l'autre pour venir en appui contre une roue (6) des deux côtés de la surface d'appui (15) de la roue (6) sur la surface portante (4) entre la surface portante (4) et la roue (6), comportant un dispositif porteur (2) pour les éléments porteurs, lequel peut être déplacé par rapport à la surface portante (4) et transversalement aux roues (6), les éléments porteurs étant réalisés sous forme de voies de déplacement (7, 8), **caractérisé en ce qu'**il est prévu un système de retenue (19, 20) pour la roue (6) ainsi que des moyens d'entraînement qui déplacent le système de levage (1) par rapport à la surface portante (4) et qui déplacent le système de retenue (19, 20) le long des voies de déplacement (7, 8) de manière synchrone au mouvement d'avancement du dispositif porteur (2) avec la même vitesse d'avancement, mais en direction opposée.

2. Système de levage selon la revendication 1, **caractérisé en ce que** les voies de déplacement (7, 8) sont montées sur le dispositif porteur (2) de manière à pouvoir être soulevées.

3. Système de levage selon la revendication 2, **caractérisé en ce que** les voies de déplacement (7, 8) sont montées sur le dispositif porteur (2) de manière à pivoter autour d'un axe de pivotement (14) agencé transversalement à son axe longitudinal.

4. Système de levage selon la revendication 3, **caractérisé en ce que** les voies de déplacement (7, 8) peuvent être abaissées à une extrémité jusqu'au niveau de la surface portante (4).

5. Système de levage selon l'une des revendications 3 ou 4, **caractérisé en ce que** l'axe de pivotement (14) est agencé dans la région médiane des voies de déplacement (7, 8).

6. Système de levage selon l'une des revendications 3 ou 4, **caractérisé en ce qu'**il est prévu deux montages à pivotement agencés à distance l'un de l'autre pour les voies de déplacement (7, 8), lesquels peuvent être libérés ou immobilisés sélectivement de telle sorte que seul un des montages à pivotement respectif réalise un axe de pivotement (14a, 14b).

7. Système de levage selon l'une des revendications précédentes, **caractérisé en ce que** le dispositif porteur (2) est déplaçable sur la surface portante (4).

8. Système de levage selon l'une des revendications précédentes, **caractérisé en ce que** les voies de déplacement (7, 8) sont réalisées par le brin supérieur (12) d'une bande de convoyeur (9) qui est montée de manière à circuler le long des voies de déplacement (7, 8).

9. Système de levage selon l'une des revendications 1 à 7, **caractérisé en ce que** la voie de déplacement (7, 8) est formée par une voie à rouleaux (17).

10. Système de levage selon l'une des revendications précédentes, **caractérisé en ce que** le système de retenue est un toc d'entraînement (19) qui peut être enfilé derrière une roue (6) et appliqué contre la face arrière de la roue (6).

11. Système de levage selon la revendication 10, **caractérisé en ce que** le système de retenue comprend additionnellement un toc d'entraînement (20) qui peut être appliqué contre la face avant d'une roue (6).

12. Système de levage selon la revendication 8, **caractérisé en ce que** le système de retenue est formé par la bande de convoyeur (9) elle-même.

13. Système de levage selon l'une des revendications précédentes, **caractérisé en ce que** la longueur des voies de déplacement (7, 8) est légèrement supérieure à la largeur du véhicule (5).

14. Système de levage selon l'une des revendications précédentes, **caractérisé en ce que** deux ou plusieurs paires de voies de déplacement (7, 8) sont agencées à distances les unes des autres sur le système.

15. Système de levage selon la revendication 14, **caractérisé en ce que** la distance mutuelle des paires les unes par rapport aux autres est réglable.

16. Système de levage selon l'une des revendications 1 à 13, **caractérisé en ce qu'**il est accouplé via une commande avec un deuxième système de levage (1) de telle sorte que les mouvements d'avancement des dispositifs porteurs (2) et des systèmes de retenue (12 ; 19, 20) des deux systèmes de levage*se déroulent de façon coordonnée.

17. Système de levage selon l'une des revendications précédentes, **caractérisé en ce que** la distance des deux voies de déplacement (7, 8) l'une par rapport à l'autre est réglable.

18. Système de levage selon l'une des revendications précédentes, **caractérisé en ce que** les voies de déplacement (7, 8) sont inclinées par rapport à la surface portante (4).

19. Système de levage selon la revendication 18, **caractérisé en ce que** l'inclinaison des voies de déplacement (7, 8) par rapport à la surface portante (4) est réglable.
